# EUROPÄISCHE PATENTSCHRIFT

(11) **EP 2 370 686 B1**
(45) Veröffentlichungstag und Bekanntmachung des Hinweises auf die Patenterteilung: **18.07.2012**
(21) Anmeldenummer: 09740153.3
(22) Anmeldetag: 26.10.2009
(51) Int. Cl.: F02M 61/16, F16K 25/04

(54) **VERFAHREN ZUR HERSTELLUNG VON DROSSELBOHRUNGEN MIT NIEDRIGEM KAVITATIONSUMSCHLAGPUNKT**
METHOD FOR PRODUCING THROTTLE HOLES HAVING A LOW CAVITATION TRANSITION POINT
PROCÉDÉ DE FABRICATION D'ORIFICES D'ÉTRANGLEMENT AVEC POINT DE TRANSITION DE LA CAVITATION PEU ÉLEVÉ

(30) Priorität: 27.11.2008 DE 102008044096
(43) Veröffentlichungstag der Anmeldung: 05.10.2011
(73) Patentinhaber: Robert Bosch GmbH, 70442 Stuttgart (DE)
(72) Erfinder: SCHANTZ, Stefan, 66482 Zweibruecken (DE); SEELBACH, Klaus, 66501 Kleinbundenbach (DE)
(86) Internationale Anmeldenummer: PCT/EP2009/064068
(87) Internationale Veröffentlichungsnummer: WO 2010/060706

(56) Entgegenhaltungen:
- EP-A1- 0 299 143
- EP-A2- 1 013 919
- WO-A1-01/48371
- WO-A1-02/063161
- DE-A1- 19 504 882
- DE-A1- 19 937 961
- DE-A1-102004 049 288
- US-A1- 2004 217 214
- US-A1- 2004 262 430
- US-A1- 2005 273 989

## Beschreibung

### Stand der Technik

Die Erfindung geht aus von bekannten Kugelsitz-oder Nadelventilen zur Einstellung eines Durchflusses fluider Medien. Derartige Ventile mit kugelförmigem oder nadelförmigem Schließelement werden in vielen Bereichen der Technik eingesetzt, in welchen ein Durchfluss fluider Medien, wie beispielsweise Gase oder Flüssigkeiten, eingestellt werden muss, beispielsweise im Bereich hydraulischer Regelungen.

Aus der EP 0 299 143 A1 ist ein Verfahren und eine Vorrichtung bekannt, zum Herstellen von Präzisionsbohrungen mit kleinen Durchmessern in Kraftstoffdüsen. Dabei wird an einer ersten Bohrstation ein Laserstrahl auf das Düsenteil gerichtet um ein Loch mit Untergröße zu bilden. Anschließend wird durch einen Erodierprozess der Lochdurchmesser präzisiert.

Ein wichtiges Anwendungsbeispiel derartiger Kugelsitz- oder Nadelventile ist im Bereich der Kraftfahrzeugtechnik zu finden, insbesondere im Bereich der Einspritztechnik. So werden derartige Ventile in zahlreichen Einspritzeinrichtungen zur hydraulischen Druckregelung und/oder Steuerung des Einspritzverhaltens derartiger Systeme eingesetzt. Vor allem im Bereich der Hochdruckspeichereinspritzsysteme (Common-Rail-System) werden diese Ventile genutzt, um den Hub eines Einspritzventilgliedes, welches Einspritzöffnungen öffnet oder schließt, zu steuern. Beispiele derartiger Vorrichtungen sind in DE 101 52 173 A1 und DE 196 50 865 A1 genannt. Dabei steht ein Steuerraum, welcher direkt oder indirekt den Hub des Einspritzventilgliedes beeinflusst, unmittelbar oder über eine weitere Bohrung über einen Einlauf mit dem Ventil in Verbindung. Das Ventil weist neben dem Schließelement einen Aktor auf, welcher das Schließelement in einen Ventilsitz presst oder von diesem abhebt, um den Steuerraum von einem Entlastungsraum zu trennen oder mit diesem zu verbinden.

Wie beispielsweise in DE 101 52 173 A1 dargestellt, weisen aus dem Stand der Technik bekannte Ventile zur Einstellung des Durchflusses in der Regel auf der dem Steuerraum zugewandten Seite des Einlaufs eine Vordrossel auf. An diese Vordrossel schließen sich zum Ventil hin eine oder mehrere Erweiterungen des Einlaufs an, welche unterschiedliche Formen annehmen können. Der Durchfluss durch die Vordrossel ist in der Regel derart ausgelegt, dass dieser kleiner ist als der Volumenstrom, der bei vollständig geöffnetem Kugelsitz- oder Nadelventil zwischen Ventilsitz und dem Schließelement vorbeiströmt. Durch die Vordrossel wird der Durchfluss weitestgehend unabhängig von der einzustellenden Hubtoleranz des Schließelements.

Herkömmliche, aus dem Stand der Technik bekannte Ventile mit kugel- oder nadelförmigem Schließelement weisen jedoch in Praxis den Nachteil einer starken Erosion auf. Wenn zwischen dem Eingang und dem Ausgang einer Drosselbohrung ein großes Druckgefälle besteht, wie dies bei Drosselbohrungen in mit Drücken von bis zu 3500 bar arbeitenden Hochdruckeinspritzventilen oft der Fall ist, beschleunigt das Medium in der Drosselbohrung so stark, dass der Druck auf ca. 0 bar absinkt und sich Kavitationsblasen bilden. Um zu verhindern, dass diese Kavitationsblasen auf der Oberfläche eines Bauteils oder gar auf dem Ventilsitz implodieren und die Oberfläche dabei beschädigen, hat es sich als vorteilhaft herausgestellt, einen großen Teil der Kavitationsblasen mit Hilfe einer zweiten Vordrossel kontrolliert in flüssige Phase umzuwandeln und so eine Beschädigung der funktionskritischen Bauteile zu vermeiden, wie dies in DE 10 2007 004 553 A1 beschrieben ist.

Im Einlaufbereich einer Drosselbohrung steigt die Strömungsgeschwindigkeit des Mediums stark an. Gleichzeitig sinkt der Druck im Medium ab. Wenn der Druck bis auf den Dampfdruck des Mediums abfällt, entstehen Kavitationsblasen. Da der Druck nicht weiter unter den Dampfdruck des Mediums abfallen kann, bleibt der Massenstrom durch die Drosselbohrung nach Erreichung des Dampfdruckes konstant. Die mit Dampf gefüllten Kavitationsblasen benötigen ein größeres Volumen als das flüssige Medium. Dadurch kommt es bei der weiteren Durchströmung der Drosselbohrung zu einem Druckrückgewinn. Der Druckrückgewinn wird durch das Anlegen der Strömung an die Drosselwand weiterverstärkt. Bei Drosseln mit höherem Druckrückgewinn kann hinter der Drossel ein höherer Gegendruck angelegt werden, bevor die Drossel nicht mehr kavitierend durchströmt wird. Je größer der Druckrückgewinn, desto unabhängiger ist die Drossel von den Verhältnissen hinter der Drossel.

Um Drosselbohrungen möglichst unempfindlich gegen Druckschwankungen und geometrische Einflüsse zu machen, wird eine kavitierende Durchströmung angestrebt. Idealerweise sollte der Kavitationsumschlagspunkt möglichst am Anfang der Drossel liegen, da der erzielbare Druckrückgewinn größer ist und somit die Neigung zu einer kavitierenden Durchströmung der Drossel ansteigt. Befindet sich hingegen der Kavitationsumschlagspunkt am Ende der Drosselbohrung im Bereich des Drosselauslaufs, so kann der Druckrückgewinn nur in einer Diffusorbohrung erfolgen. Da diese jedoch einen größeren Querschnitt hat, ist der erzielbare Druckrückgewinn geringer. Erweitert sich der Drosselkanal in Strömungsrichtung langsam, so liegt der Kavitationsumschlagspunkt am Anfang der Drossel, da der engste Querschnitt des Drosselkanals in der Nähe des Drosseleinlaufs liegt.

Drosselbohrungen, die in den Kraftstoffinjektoren gemäß dem Stand der Technik dargestellt sind, können z.B. über spanabgebende Fertigungsverfahren wie das Bohren erzeugt werden. Es ist jedoch auch möglich, Drosselbohrungen durch Erodieren herzustellen. Beim Erodieren entsteht durch den stärken Abbrand der Elektrode an der Spitze eine Drosselbohrung, die sich in Erodierrichtung langsam verjüngt. Das Verjüngen der Drosselbohrung in Erodierrichtung erfolgt im Mikrometerbereich. Eine erodierte Drossel kann demzufolge den Kavitationsumschlagspunkt nur dann im Bereich des Einlaufs haben, wenn diese entgegen der Erodierrichtung durchströmt wird. Ist das Erodieren entgegen der Durchströmrichtung nicht möglich oder unwirtschaftlich oder stehen andere Gründe entgegen, entsteht ein Drosselkanal, der sich in Durchströmrichtung langsam verjüngt. Dadurch entsteht ein Kavitationsumschlagspunkt kurz vor dem Drosselauslauf, was zu dem bereits erwähnten verringerten maximal erzielbaren Druckrückgewinn führt.

Um eine Drosselbohrung herzustellen, die sich entgegen dem "natürlichen" Erodierprozess in Erodierrichtung langsam erweitert, wird gegenwärtig das zu erodierende Bauteil so in eine Taumelbewegung versetzt, dass sich der Ursprung der Taumelbewegung in der Nähe des Drosseleinlaufs befindet. Dieses bisher praktizierte Verfahren geht jedoch mit dem Nachteil einher, dass sich kleine Drosseldurchflusstoleranzen nur schwer darstellen lassen.

### Offenbarung der Erfindung

Die vorliegende Erfindung beschreibt ein Verfahren zur Herstellung einer Drosselstelle, mit dem eine Drosselbohrung hergestellt werden kann, die einen Kavitationsumschlagspunkt von nicht-kavitierender zu kavitierender Durchströmung möglichst am Drosseleinlauf aufweist und die im Wege des Erodierens auch in Strömungsrichtung hergestellt werden kann.

Der erfindungsgemäß vorgeschlagenen Lösung folgend, wird eine die Vorteile hinsichtlich eines Kavitationsumschlagpunktes von nicht-kavitierender zu kavitierender Durchströmung aufweisende, sich in Durchströmrichtung erweiternde Drosselbohrung durch Prägen einer Diffusorbohrung im Weichzustand hergestellt. Danach erfolgt ein Härten des so erhaltenen Bauteiles. Bei einer sich in Strömungsrichtung erweiternden Drosselbohrung bestimmt der Eingangsbereich der Drossel den Durchfluss. Daher ist der Durchmesser in diesem Bereich sehr genau gefertigt. Die Länge des Eingangsbereichs liegt vorzugsweise zwischen ein- und zweimal dem Drosseldurchmesser. Der Eingangsbereich der Drosselbohrung kann zylindrisch sein oder sich in Strömungsrichtung im Mikrometerbereich erweitern. Der Auslaufbereich der Drosselbohrung hat keinen Einfluss auf den Durchfluss, bestimmt jedoch die Höhe des möglichen Druckrückgewinns. Der Auslaufbereich muss einen größeren Durchmesser als der Einlaufbereich der Drosselbohrung haben und sich in Strömungsrichtung im Mikrometerbereich erweitern. Während der Einlaufbereich der Drosselbohrung vorzugsweise nach dem Härten des Bauteils durch einen Erodierprozess hergestellt wird, entsteht der Auslaufbereich der Drossel durch einen Prägeprozess im Weichzustand.

Nach einer ersten spanabhebenden Bearbeitung wird eine bereits vorhandene Diffusorbohrung durch Zuprägen soweit im Durchmesser reduziert, dass der kleinste Querschnitt etwas kleiner als der später durch einen Erodierprozess herzustellende Drosseldurchmesser wird. Dabei entsteht eine Drosselform, die einer Lavaldüse ähnlich ist. anschließend wird der für eine kavitierende Durchströmung der Drosselbohrung schädliche, sich verjüngende Bereich der Drosselbohrung, der dem Einlaufbereich einer Lavaldüse entspricht, durch das Einbringen eines Preholes, vorzugsweise durch Bohren ersetzt. Dabei kommt es auf einen möglichst scharfkantigen Übergang zwischen dem Prehole und der Drosselbohrung an. Nach dem Härten des Bauteils erfolgt dann die Anfertigung eines genau definierten Drosseldurchmessers durch einen Erodierprozess. Dabei gleicht sich die Elektrode in vorteilhafter Weise an die beim Zuprägen entstandene Trichterform an.

Das erfindungsgemäß vorgeschlagene Verfahren zur Herstellung einer Drosselbohrung zeichnet sich vor allem dadurch aus, das sich der Prägestempel in einer Führungsbohrung, welche den Steuerraum begrenzt und indem das Einspritzventilglied montiert wird, selbst zentriert. Dem erfindungsgemäß vorgeschlagene Verfahren folgend, können Standarterodierprozesse zur Fertigung der Drosselbohrungskontur eingesetzt werden. Der Prägeprozess lässt sich in den ohnehin vorgesehenen Prozessschritt spanabhebende Fertigung integrieren.

Ein Kavitationsumschlagpunkt im Drosseleinlaufbereich einer Drosselbohrung lässt sich durch den scharfkantigen Übergang zwischen dem Prehole und der Drosselbohrung sowie einer Mindestdrosselbohrungslänge, die abhängig vom Drosseldurchmesser an der Drosselstelle ist, erreichen. Des Weiteren wird ein Kavitationsumschlagpunkt im Drosseleinlaufbereich durch einen sich in Durchströmung der Drosselbohrung langsam vergrößernden Drosselquerschnitt begünstigt.

Das erfindungsgemäß vorgeschlagene Verfahren zur Herstellung der Drosselbohrung mit Kavitationsumschlagpunkt im Drosseleinlaufbereich kann bei Drosselbohrungen an Kraftstoffinjektoren aller Kraftstoffeinspritzsysteme für selbstzündende Verbrennungskraftmaschinen angewendet werden, bei denen ein Erodieren der Drosselbohrung im Ventilstück entgegen der Strömungsrichtung nicht möglich ist, oder eine konische Kontur der Drossel weiter betont werden soll.

### Kurze Beschreibung der Zeichnungen

Anhand der Zeichnung wird die Erfindung nachstehend eingehender beschrieben.

Es zeigen:
- Figur 1: Eine Darstellung eines Bauteiles, in dem ein Ablaufkanal verläuft, in der Drehvorstufe,
- Figur 2: das in Figur 1 in der Drehvorstufe dargestellte Bauteil mit Prägestempelabdruck,
- Figur 3: das spanabhebend erfolgende Entfernen des Prägestempelabdrucks und das Herstellen eines Preholes mit scharfkantigem Übergang zur Drosselbohrung,
- Figur 4: die erordierte Hartstufe mit finalem hochgenau eingestelltem Drosseldurchmesser,
- Figur 5: eine Ausführungsform eines Ablaufkanales, der sich durch zwei Bauteile, eine Drosselplatte und einen Führungskörper, erstreckt,
- Figur 6: die Darstellung eines insbesondere als Ventilstück beschaffenen Bauteiles, in welchen die erfindungsgemäß hergestellte Drosselstelle ausgeführt ist.

### Ausführungsformen der Erfindung

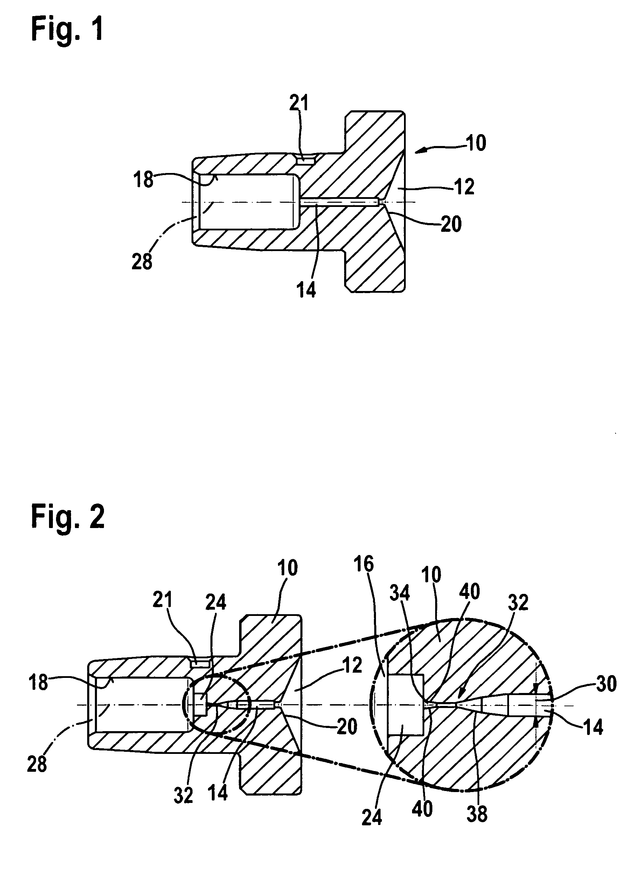

Figur 1 zeigt ein Bauteil, insbesondere ein Ventilstück eines Kraftstoffinjektors, in dem ein Kanal zur Absteuerung eines unter Druck stehenden Mediums ausgebildet ist.

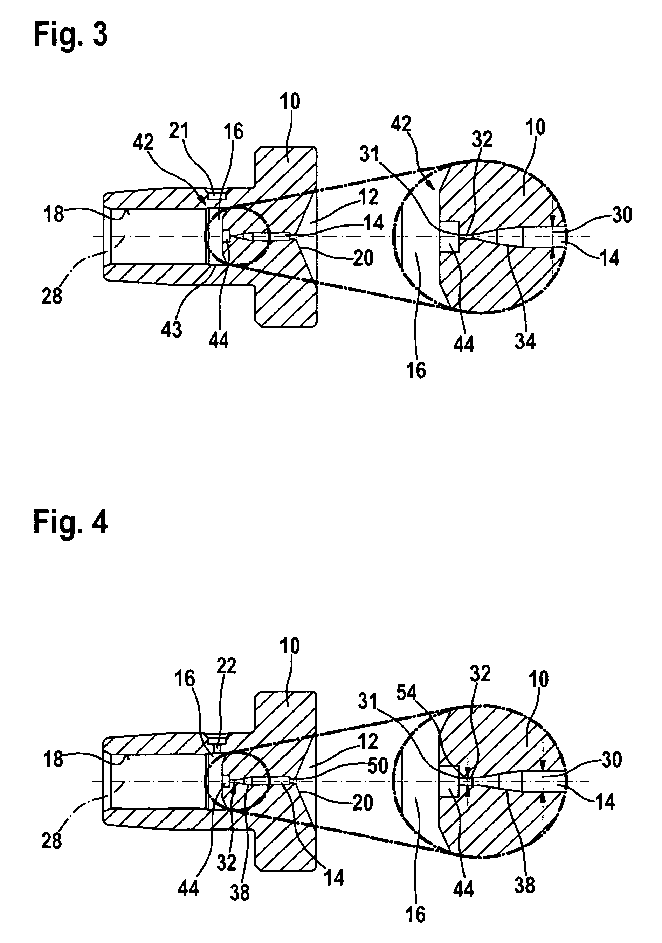

Bei dem in Figur 1 dargestellten Bauteil 10 handelt es sich insbesondere um das Ventilstück eines Kraftstoffinjektors, in dem sich ein Steuerraum befindet. Der Steuerraum wird durch ein unter Druck stehendes Medium, insbesondere unter Systemdruck stehenden Kraftstoff beaufschlagt. Der Systemdruck, unter welchem der Kraftstoff steht, wird z.B. in einem Hochdruckspeicherkörper (Common-Rail) eines Hochdruckspeichereinspritzsystems durch eine den Hochdruckspeicherköper (Common-Rail) beaufschlagende Hochdruckpumpe erzeugt. An einer Ansenkung 21 wird später eine Zulaufdrossel 22 gefertigt (vgl. Darstellung gemäß Figur 3), durch die das unter Systemdruck stehende Medium, wie z.B. Kraftstoff, in den Steuerraum (vgl. Figur 3) einströmt.

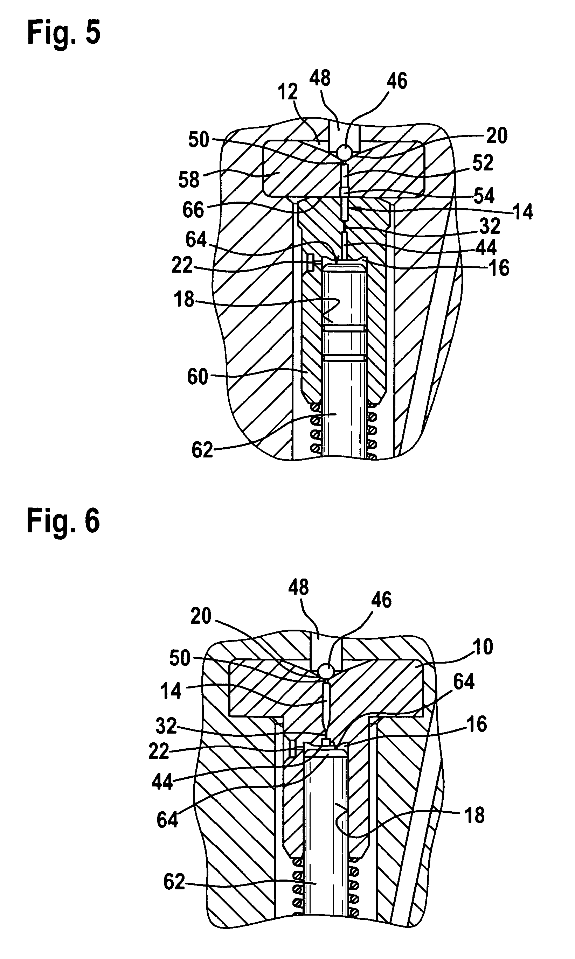

Eine Druckentlastung des Steuerraumes, der im Ventilstück 10 ausgebildet wird, erfolgt durch einen Kanal, insbesondere einen Ablaufkanal 14. Der im Ventilstück 10 verlaufende Kanal mündet an einem Ventilsitz 20, der in einem Trichter 12 an einer Planseite des Ventilstücks 10 ausgeführt ist. Im Ventilsitz 20 ist ein hier nicht näher dargestelltes kugel- oder nadelförmiges Schließelement gehalten, welches im geschlossenen Zustand den Ablaufkanal 14 verschließt und diesen zur Druckentlastung des Steuerraumes (vgl. Figuren 3 und 6) durch ein Magnetventil oder einen Piezoaktor oder dergleichen öffnet.

In Figur 1 ist das Bauteil 10, bei dem es sich insbesondere um ein Ventilstück handelt mit einer Führungsbohrung 18, die sich an den Steuerraum anschließt, versehen und in der Drehvorstufe vor dem Prägeprozess dargestellt.

Der Darstellung gemäß Figur 2 ist das bevorzugt als Ventilstück ausgebildete Bauteil gemäß Figur 1 in einer weiteren Bearbeitungsstufe dargestellt.

Figur 2 zeigt, dass das als Ventilstück beschaffene Bauteil 10 die sich an den Steuerraum 16 symmetrisch zur Symmetrieachse 28 erstreckende Führungsbohrung 18 aufweist. Die Führungsbohrung 18 dient zur Zentrierung und zur Führung eines Prägestempels. Der Prägestempel weist stirnseitig einen Prägekopf auf. Der in der Führungsbohrung 18 des Ventilstücks 10 zentrierte Prägestempel kann in Zusammenhang mit der spanabhebenden Drehbearbeitung, bei der der Ablaufkanal 14 im Ventilstück 10 hergestellt wird, in die Führungsbohrung 18 eingeführt werden und verformt die stirnseitige Begrenzungswand der Führungsbohrung 18, durch welche sich der Ablaufkanal 14 erstreckt, wie in Figur 2 dargestellt. Das Prägen der Drosselstelle 32 erfolgt bevorzugt im Weichzustand des Ventilstückes 10, d.h. zu einem Zeitpunkt, an dem dessen Oberfläche noch nicht gehärtet ist. Durch das Einfahren des Prägestempels in die Führungsbohrung 18 kommt es zu einer Stauchung 40 des Materials des Ventilstücks 10 im Bereich des Ablaufkanals 14 und zur Formung einer Drosselstelle 32 durch gestauchtes Material 40. Im gestauchten Material 40 verbleibt ein Restquerschnitt 41, der etwas kleiner ist als der später hochgenau gefertigte Drosseldurchmesser 54. Aufgrund der gleichmäßig im Material des Bauteiles 10, d.h. des Ventilstückes 10 ausgebildeten, geprägten Kontur entsteht eine Drosselstelle 32, an welche sich in axiale Richtung gesehen, eine kontinuierliche Querschnittserweiterung 38 des Ablaufkanals 14 anschließt. Der Ablaufkanal 14 mündet - wie in Figur 2 dargestellt - am Ventilsitz 20 im Trichter 12 des Ventilstückes 10. Eine Sitzdrossel 50 im Ablaufkanal 14 bewirkt, dass ein Teil der Kavitationsblasen insbesondere im Randbereich - zur Kondensation kommt und somit verhindert wird, dass die Kavitationsblasen den Ventilsitz, der im Ventilstück 10 ausgebildet ist, zerstören. Die Sitzdrossel 50 liegt im Ablaufkanal 14 unmittelbar vor der Mündung im Ventilsitz 20. Wie in Figur 2 dargestellt, erlaubt das Einführen des Prägestempels in die Führungsbohrung 18 eine Selbstzentrierung des Prägestempels während des Prägevorgangs.

Figur 3 zeigt eine spanabhebende Nachbearbeitung des Ventilstücks zur Ausformung des Steuerraums.

Wie in Figur 2 dargestellt, entsteht beim Prägen eine Drosselstellenkontur, die derjenigen einer Lavaldüse ähnelt. Diese einer Lavaldüse ähnelnde Kontur weist sowohl einen gerundeten Einlaufbereich als auch einen gerundeten Auslaufbereich auf. Der Einlaufbereich mit seinen verrundeten Kanten ist ungünstig zur Ausbildung einer kavitierenden Durchströmung der Drosselstelle durch das Medium. Es ist vielmehr ein scharfkantiger Drosseleinlauf erforderlich. Aus diesem Grund wird der Abdruck des Prägestempels komplett entfernt, was vorzugsweise durch einen spanabhebende Bearbeitungsvorgang erfolgt. Das Prehole 44 befindet sich an der Stelle, wo vor der spanabhebenden Bearbeitung der für eine kavitierende Durchströmung schädliche Einlaufbereich der Prägekontur lag und stellt einen scharfkantigen Übergang zu der Drosselstelle 32 dar.

Der Darstellung gemäß Figur 3 ist entnehmbar, dass aufgrund des gestauchten Materials 40 die geprägte Kontur entsteht. Das gestauchte Material 40 begrenzt mit seiner an den Ablaufkanal 14 im Ventilstück 10 angrenzenden Seite die Drosselstelle 32 im Ablaufkanal 14. Da der Prägestempel gemäß der Darstellung in Figur 2 in der Führungsbohrung 18 des Ventilstückes 10 zentriert ist, wird die Verformung des Materials des Ventilstücks 10 zur Ausbildung der Drosselstelle 32 symmetrisch in das Ventilstück 10 eingebracht, d.h. die Stauchung 40 des Materials des Ventilstückes 10 verläuft symmetrisch zur Symmetrieachse 28 des Ventilstückes 10. Bei der spanabhebenden Nachbearbeitungsstufe erfolgt ein Ausdrehen des Steuerraumes 16 im Ventilstück 10 in dem Bereich, in dem in dem Bearbeitungsschritt gemäß Figur 2, der Prägestempelabdruck lag. Im Rahmen der spanabhebenden Bearbeitung gemäß Figur 3 wird einerseits der Steuerraum 16 neben der Zulaufdrossel 22 ausgeformt und andererseits ein einen scharfkantigen Drosseleinlauf darstellendes Prehole 44 gefertigt. Dieses Prehole 44 liegt eingangsseitig der Drosselstelle 32. Der Kavitationsumschlagspunkt liegt im Eingangsbereich der Drosselstelle 32 und wird beim Erodierprozess erzeugt. Durch die Stauchung des Materials 40 wird die Drosselstelle 32 geformt.

Das scharfkantig ausgebildete Prehole 44 gemäß der Darstellung in Figur 3 liegt zwischen dem Steuerraum 16 und einem Einlauf 31 in die Drosselstelle 32.

Die Darstellung gemäß Figur 4 zeigt die erodierte Hartstufe des Ventilstücks.

Anschließend erfolgt ein Erodieren, wodurch an der Drosselstelle 32 der den Durchfluss bestimmende, definierte Durchmesser 54 hochgenau hergestellt wird. Beim Erodieren des Ventilstücks 10 entsteht schließlich eine Drosselstelle 32 mit sehr genauem Durchmesser 54, die in einen beim Prägeprozess entstandenen, sich langsam erweiternden Auslaufbereich (vgl. Position 38) mündet. Der beim Prägeprozess entstehende kleinste Restquerschnitt ist in vorteilhafter Weise so einzustellen, dass er leicht kleiner als der beim Erodieren entstehende Drosseldurchmesser ist. Dadurch wird ein möglichst weicher Übergang zwischen der Erodierkontur und der Prägekontur erreicht. Beim Erodieren des Ventilstücks 10 entsteht eine sich in Erodierrichtung erweiternde Drosselstelle 32, die in die kontinuierliche Querschnittserweiterung 38 übergeht, was die Durchströmeigenschaften der erfindungsgemäß hergestellten Drosselstelle 32 im Ablaufkanal 14 außerordentlich günstig beeinflusst. Die zum Erodieren, d.h. zur Erzeugung des schlussendlichen Drosseldurchmessers 54 eingesetzte Erodierelektrode gleicht sich in vorteilhafter Weise an die zuvor im Wege des Prägens geformte Kontur der Drosselstelle 32 an. Dadurch können im Rahmen des Erodierens extrem kurze Zykluszeiten dargestellt werden.

Vor dem Erodierprozess, der bevorzugt in einer Erodierrichtung erfolgt, die gleichgerichtet zur Durchströmrichtung der Drosselstelle 32 im Ablaufkanal 14 zum Ventilsitz 20 liegt, erfolgt ein Härten des Ventilstückes 10. Der angestrebte genau wohl definierte Drosseldurchmesser 54 der Drosselstelle 32, d.h. die Feinjustage des Drosselquerschnittes und der dadurch erzielten Drosselwirkung wird durch den Erodierprozess und ein sich an diesen anschließendes hydro-erosives-Verrunden eingestellt.

Durch das vorstehend dargestellte Bearbeitungsverfahren zur Herstellung einer Drosselstelle 32 im Ablaufkanal 14 eines Ventilstücks 10, lässt sich ein Kavitationsumschlagspunkt am Drosseleinlaufbereich erreichen, der ein Umschlagen von nicht-kavitierender in kavitierende Durchströmung bei einem relativ hohen Gegendruck erzeugt. Dadurch ist die Drosselstelle 32 unempfindlich bezüglich Druck und Geometrieeinflüssen.

Wie die Figuren 2, 3 und 4 zeigen, ist die für die kavitierende Durchströmung der Drosselstelle 32 vorteilhafte, sich kontinuierlich erweiternde Querschnittserweiterung 38 dadurch erzielbar, dass die zur Endbearbeitung der Drosselstelle 32 eingesetzte Erodierelektrode, sich an die durch den Prägevorgang bereits vorhandene geprägte Kontur, d.h. eine lavalartige Düsenkontur bzw. eine Trichterform stromab der Drosselstelle 32 angleicht. Dadurch wird in vorteilhafter Weise erreicht, dass der Kavitationsumschlagspunkt im Einlaufbereich der Drosselstelle 32 liegt. Von besonderer Bedeutung ist die Länge der nacherodierten Drosselbohrung. Der Einlaufbereich der Drosselbohrung kann zylindrisch sein oder sich in Strömungsrichtung im Mikrometerbereich erweitern. Der Auslaufbereich der Drosselbohrung hat keinen Einfluss auf den Durchfluss, bestimmt jedoch die Höhe des möglichen Druckrückgewinns. Der Auslaufbereich muss einen größeren Durchmesser als der Einlaufbereich der Drosselbohrung haben und sich in Strömungsrichtung im Mikrometerbereich erweitern.

Der dargestellte Fertigungsprozess zur Herstellung einer Drosselstelle 32 mit Kavitationsumschlagpunkt im Drosseleinlaufbereich kann bei Drosselstellen 32 umgesetzt werden, die in Ablaufkanälen 14 für Steuerräume 16 zur Betätigung von Kraftstoffinjektoren angewendet werden und bei denen das Erodieren der Drosselstelle 32, entgegen der Durchströmrichtung nicht möglich ist.

Bei Einspritzdüsen am brennraumseitigen Ende von Kraftstoffinjektoren kann die Konizität der Einspritzöffnungen, die in den Brennraum münden, durch den K-Faktor, d.h. den Konizitätsfaktor beschrieben werden. Mit steigendem K-Faktor verjüngt sich der Querschnitt der Einspritzöffnung in Strömungsrichtung zunehmend. Bei Einspritzöffnungen wird die Konizität derselben dazu genutzt, den Kavitationszeitpunkt zu verzögern und dadurch die Strahleindringtiefe beim Einspritzen von Kraftstoff in den Brennraum der Verbrennungskraftmaschine zu vergrößern. Auch zur Herstellung von Einspritzöffnungen kann der oben stehend beschriebene Prägeprozess herangezogen werden, um konisch verlaufende Einspritzöffnungen kostengünstiger herzustellen.

Figur 5 zeigt einen durch zwei voneinander getrennte Bauteile verlaufenden Ablaufkanal zur Druckentlastung eines Steuerraumes.

Figur 5 zeigt, dass entlang einer Kontaktfläche 66 eine Drosselplatte 58 mit einem Führungskörper 60 verbunden ist. Im Führungskörper 60 ist in der Führungsbohrung 18 das bevorzugt nadelförmig ausgebildete Einspritzventilglied 62 geführt. Dessen Planseite 64 begrenzt den Steuerraum 16, der seinerseits über die Zulaufdrossel 22 mit unter Systemdruck stehenden Kraftstoff beaufschlagt ist. Der Ablaufkanal 14, der sich vom Steuerraum 16 im Führungskörper 60 zum Ventilsitz 20 in der Drosselplatte 58 erstreckt, umfasst das Prehole 44 und die sich in Durchströmungsrichtung gesehen an dieses anschließende Drosselstelle 32. Die Drosselstelle 32 geht - in Durchströmrichtung gesehen - in einem Diffusor 52 über, der wiederum in einer unterhalb des Ventilsitzes 20 vorgesehene Sitzdrossel 50 mündet. Der Ventilsitz 20 gemäß der Ausführungsform in Figur 5 ist durch ein kugelförmig oder konisch ausgebildetes Schließelement 46 verschlossen, welches in einer Schließelementaufnahme 58 aufgenommen ist. Die Schließelementaufnahme 58 kann an der Unterseite eines Ankerbolzens ausgebildet sein, der über einem Magnetventil oder einem Piezoaktor betätigbar ist.

Bei der in Figur 5 dargestellten Ausführungsform verläuft der Ablaufkanal 14 durch zwei getrennte Bauteile, d.h. die Drosselplatte 58 sowie dem Führungskörper 60. Der Ablaufkanal 14 wird in der Drosselplatte 58 durch spanabhebende Prozessschritte und in Bezug auf den Führungskörper 60 ebenfalls durch spanabhebende Bearbeitung erzeugt. Nachteilig ist hier, dass zwei Bauelemente benötigt werden, dadurch die Herstellung insgesamt gesehen teurer ist und eine zusätzliche Dichtfläche entsteht. Hier ist der Prägeprozess nicht verwirklicht, so dass das in Fig. 5 dargestellte Ventilstück zwei Bauteile, d.h. die Drosselplatte 58 und den Führungskörper 60, umfasst.

Demgegenüber zeigt Figur 6 eine durch das erfindungsgemäß vorgeschlagene Verfahren im Ablaufkanal 14 erzeugte Drosselstelle.

Wie Figur 6 zeigt, ist im Gegensatz zur Darstellung gemäß Figur 5 das Ventilstück 10 einstückig ausgebildet, d. h. die Drosselplatte 58 und der Führungskörper 60 zur Führung des bevorzugt nadelförmig ausgebildeten Einspritzventilgliedes 62 bilden ein Bauteil.

Das nadelförmig ausgebildete Einspritzventil 62 ist in der Führungsbohrung 18 des Ventilstückes 10 geführt und begrenzt mit seiner Planseite 64 den Steuerraum 16. Der Steuerraum 16 ist seinerseits durch die Zulaufdrossel 22 mit unter Systemdruck stehenden Kraftstoff beaufschlagt. Die Druckentlastung des Steuerraums 16 erfolgt in den Ablaufkanal 14, wobei das Prehole 44 eine Vorkammer des Drosselkanals 14 und der darin enthaltenen Drosselstelle 32 darstellt. Der scharfkantige Übergang 44 wird durch die Kante zwischen dem Prehole 44 und der Drossel dargestellt. Der scharfkantige Übergang 44 (Prehole) liegt in Durchströmrichtung des Ablaufkanals 14 vor der Drosselstelle 32. Diese ist wie in den Darstellungen gemäß den Figuren 1-4 gezeigt, durch spanabhebende Prozessschritte und durch Prägen hergestellt. Die Durchmesserverengung 34, 54 des Ablaufkanals 14, welche die eigentliche Drosselstelle 32 darstellt, erfolgt durch gestauchtes Material 40, welches beim Prägen den Durchflussquerschnitt des Ablaufkanales 14 an der Drosselstelle 32 begrenzt. Die Drosselstelle 32 umfasst gemäß der Bearbeitungsschritte, die in den Figuren 1-4 dargestellt sind, zum einen den erodierten Einlaufbereich und zum anderen den geprägten Auslaufbereich, der in Durchströmungsrichtung durch das zum Ventilsitz 20 zu führende Medium vor der kontinuierlichen Querschnittserweiterung 38 liegt.

Die kontinuierliche Querschnittserweiterung 38 des Ablaufkanales 14 geht in eine Sitzdrossel 50, die auch als Vordrossel bezeichnet wird, unterhalb des Ventilsitzes 20 über, der in der Darstellung gemäß Figur 6 durch das hier kugelförmig ausgebildete Schließelement 46 verschlossen ist. Das Schließelement 46 ist in einer Schließelementaufnahme 48 geführt, die ihrerseits über einen Magnetventil oder über einen Piezoaktor, um zwei Beispiele zu nennen, betätigt wird. Beim Öffnen des Ventilsitzes 20 wird das Schließelement 46 aus dem Ventilsitz 20 gehoben, sodass über die unterhalb des Ventilsitzes 20 angeordnete Sitzdrossel 50 Steuermenge aus dem Steuerraum 16 über den Ablaufkanal 14 mit daran integrierter Drosselstelle 32 abgesteuert werden kann.

## Patentansprüche

1. Verfahren zur Herstellung einer Drosselstelle (32), insbesondere in einem Kanal (14) zur Absteuerung eines Mediums aus einem Raum (16), über welchen ein Einspritzventilglied (62) eines Kraftstoffinjektors betätigt wird, mit nachfolgenden Verfahrensschritten:
a) der Herstellung des Kanals (14) in einem Ventilstück (10),
b) dem Erzeugen einer Kontur im Kanal (14) durch Prägen der Drosselstelle (32),
c) dem Erzeugen eines scharfkantigen Übergangs (44) vor der Drosselstelle (32) und
d) dem Herstellen eines definierten Durchmessers (54) durch Erodieren an der Drosselstelle (32) und dem Beibehalten eines geprägten Auslaufbereichs (38) der Drosselstelle (32).

2. Verfahren gemäß Anspruch 1, **dadurch gekennzeichnet, dass** gemäß Verfahrensschritt b), eine Prägung durch einen in einer Führungsbohrung (18) zentrierten Prägestempel im Weichzustand des Ventilstücks (10) erfolgt.

3. Verfahren gemäß Anspruch 2, **dadurch gekennzeichnet, dass** das Material des Ventilstücks (10) durch das Prägen eine Stauchung (40) erfährt, die die Kontur des Kanales (14) stromab der Drosselstelle (32) definiert.

4. Verfahren gemäß Anspruch 1, **dadurch gekennzeichnet, dass** das Ventilstück (10) nach Durchführung des Verfahrensschrittes b) und vor der Durchführung des Verfahrensschrittes c) gehärtet wird.

5. Verfahren gemäß Anspruch 1, **dadurch gekennzeichnet, dass** das Erodieren gemäß Verfahrensschritt d) in einer Erodierrichtung erfolgt, die mit der Durchströmrichtung, in welcher die Drosselstelle (32) durch das Medium durchströmt wird, zusammenfällt.

6. Verfahren gemäß Anspruch 5, **dadurch gekennzeichnet, dass** im Rahmen der Erodierbearbeitung ein HE-Verrunden der geprägten Kontur der Drosselstelle (32) erfolgt.

7. Verfahren gemäß Anspruch 1, **dadurch gekennzeichnet, dass** der Verfahrensschritt b), während einer Weichbearbeitungsstufe des Ventilstücks (10) erfolgt und während dessen spanabhebender Bearbeitung, insbesondere während der Drehbearbeitung des Ventilstücks (10) durchgeführt wird.

8. Verfahren gemäß Anspruch 1, **dadurch gekennzeichnet, dass** gemäß Verfahrensschritt d) eine das Erodieren in Erodierrichtung vornehmende Erodierelektrode sich einer durch die geprägte Kontur der Drosselstelle (32) vorgegebenen Kontur, insbesondere einer Trichterkontur, zur Endbearbeitung des Kanals (14), insbesondere der geprägten Kontur angleicht.

9. Verfahren gemäß einem oder mehrere der vorhergehenden Ansprüche 1-8, **dadurch gekennzeichnet, dass** eine Konizität aufweisende Einspritzöffnung für Kraftstoff zur Erhöhung der Strahleindringtiefe in den Brennraum erzeugt wird.

10. Verfahren gemäß Anspruch 1, **dadurch gekennzeichnet, dass** gemäß Verfahrensschritt b) der geprägte Auslaufbereich der Drosselstelle (32) vor einer kontinuierlichen Querschnittserweiterung (38) des Ablaufkanals (14) liegt.

## Claims

1. Method for producing a throttle point (32), in particular in a duct (14) for discharging a medium out of a chamber (16) by means of which an injection valve member (62) of a fuel injector is actuated, having the following method steps:
a) producing the duct (14) in a valve piece (10),
b) generating a contour in the duct (14) by impressing the throttle point (32),
c) generating a sharp-edged transition (44) upstream of the throttle point (32), and
d) producing a defined diameter (54) by erosion at the throttle point (32), and maintaining an impressed outlet region (38) of the throttle point (32).

2. Method according to Claim 1, **characterized in that**, in method step b), an impression takes place by means of an impressing punch, which is centered in a guide bore (18), in the soft state of the valve piece (10).

3. Method according to Claim 2, **characterized in that** the material of the valve piece (10) undergoes upsetting (40) as a result of the impressing, and said upsetting defines the contour of the duct (14) downstream of the throttle point (32).

4. Method according to Claim 1, **characterized in that** the valve piece (10) is hardened after method step b) is carried out and before method step c) is carried out.

5. Method according to Claim 1, **characterized in that** the erosion in method step d) is carried out in an erosion direction which coincides with the throughflow direction in which the medium flows through the throttle point (32).

6. Method according to Claim 5, **characterized in that** HE rounding of the impressed contour of the throttle point (32) is carried out during the course of erosion machining.

7. Method according to Claim 1, **characterized in that** method step b) is carried out during a soft machining stage of the valve piece (10) and during the cutting machining thereof, in particular during the turning machining of the valve piece (10).

8. Method according to Claim 1, **characterized in that**, in method step d), an erosion electrode which carries out the erosion in the erosion direction is adapted to a contour predefined by the impressed contour of the throttle point (32), in particular a funnel-shaped contour, for the finish machining of the duct (14), in particular of the impressed contour.

9. Method according to one or more of the preceding Claims 1-8, **characterized in that** an injection opening, which has a conicity, for fuel is generated in order to increase the jet penetration depth into the combustion chamber.

10. Method according to Claim 1, **characterized in that**, in method step b), the impressed outlet region of the throttle point (32) is situated upstream of a continuous cross-sectional widening (38) of the outlet duct (14).

## Revendications

1. Procédé de fabrication d'un point d'étranglement (32), en particulier dans un canal (14) pour couper le débit d'un fluide provenant d'un espace (16), par le biais duquel un organe de soupape d'injection (62) d'un injecteur de carburant est actionné, comprenant les étapes de procédé suivantes :
a) fabrication du canal (14) dans une pièce de soupape (10),
b) production d'un contour dans le canal (14) par matriçage du point d'étranglement (32),
c) production d'une transition (44) à arêtes vives avant le point d'étranglement (32) et
d) production d'un diamètre défini (54) par érosion au niveau du point d'étranglement (32) et conservation d'une zone de sortie matricée (38) du point d'étranglement (32).

2. Procédé selon la revendication 1, **caractérisé en ce que**, selon l'étape de procédé b), un matriçage est effectué par un poinçon de matriçage centré dans un alésage de guidage (18) dans l'état ramolli de la pièce de soupape (10).

3. Procédé selon la revendication 2, **caractérisé en ce que** le matériau de la pièce de soupape (10) subit sous l'effet du matriçage une déformation par compression (40) qui définit le contour du canal (14) en aval du point d'étranglement (32).

4. Procédé selon la revendication 1, **caractérisé en ce que** la pièce de soupape (10) est durcie après la mise en oeuvre de l'étape de procédé b) et avant la mise en oeuvre de l'étape de procédé c).

5. Procédé selon la revendication 1, **caractérisé en ce que** l'érosion selon l'étape de procédé d) a lieu dans une direction d'érosion qui coïncide avec la direction d'écoulement dans laquelle le point d'étranglement (32) est parcouru par le fluide.

6. Procédé selon la revendication 5, **caractérisé en ce que** dans le cadre de l'usinage par érosion a lieu un arrondissage hydro-érosif du contour matricé du point d'étranglement (32).

7. Procédé selon la revendication 1, **caractérisé en ce que** l'étape de procédé b) a lieu pendant un stade d'usinage à l'état ramolli de la pièce de soupape (10), et pendant son usinage par enlèvement de copeaux, notamment pendant le tournage de la pièce de soupape (10).

8. Procédé selon la revendication 1, **caractérisé en ce que**, selon l'étape de procédé d), une électrode d'érosion effectuant l'érosion dans la direction d'érosion s'ajuste à un contour prédéfini par le contour matricé du point d'étranglement (32), notamment un contour en entonnoir, pour l'usinage final du canal (14), en particulier au contour matricé.

9. Procédé selon l'une quelconque ou plusieurs des revendications précédentes 1 à 8, **caractérisé en ce qu'**une ouverture d'injection de carburant présentant une conicité est produite pour augmenter la profondeur de pénétration du jet dans la chambre de combustion.

10. Procédé selon la revendication 1, **caractérisé en ce que**, selon l'étape de procédé b), la région de sortie matricée du point d'étranglement (32) est située avant un élargissement de section transversale continu (38) du canal d'écoulement (14).
